# EUROPÄISCHE PATENTSCHRIFT

(11) **EP 3 207 357 B1**
(45) Veröffentlichungstag und Bekanntmachung des Hinweises auf die Patenterteilung: **13.02.2019**
(21) Anmeldenummer: 15759402.9
(22) Anmeldetag: 17.08.2015
(51) Int. Cl.: G01N 15/06

(54) **SENSOR ZUR BESTIMMUNG EINER KONZENTRATION VON PARTIKELN IN EINEM GASSTROM**
SENSOR FOR DETERMINING A CONCENTRATION OF PARTICLES IN A GAS FLOW
DÉTECTEUR POUR LA DÉTERMINATION D'UNE CONCENTRATION DE PARTICULES DANS UN FLUX DE GAZ

(30) Priorität: 14.10.2014 DE 102014220791
(43) Veröffentlichungstag der Anmeldung: 23.08.2017
(73) Patentinhaber: Robert Bosch GmbH, 70442 Stuttgart (DE)
(72) Erfinder: FUCHS, Sebastian, 70376 Stuttgart (DE); BAARS, Enno, 71229 Leonberg (DE); TIEFENBACH, Andy, 71665 Vaihingen-Horrheim (DE)
(86) Internationale Anmeldenummer: PCT/EP2015/068822
(87) Internationale Veröffentlichungsnummer: WO 2016/058732

(56) Entgegenhaltungen:
- JP-A- 2012 013 639
- US-A1- 2011 259 079
- US-B1- 7 143 637

## Beschreibung

Die vorliegende Erfindung betrifft einen Sensor zur Bestimmung einer Konzentration von Partikeln in einem Gasstrom, insbesondere von Rußpartikeln im Abgas einer Verbrennungskraftmaschine.

### Stand der Technik

Aus dem Stand der Technik sind Sensoren bekannt, welche zur Bestimmung der Konzentration von Rußpartikeln in einem Abgastrakt einer Verbrennungskraftmaschine dienen, insbesondere zur Überwachung von Diesel-Partikelfiltern. Beispielsweise beschreiben die DE 10 2006 032 741 A1 und die DE 10 2006 029 215 A1 jeweils einen Partikelsensor, welcher über ein Trägerelement und ein, auf einer Oberfläche des Trägerelements angeordnetes, dem Gasstrom aussetzbares Sensorelement verfügen. Der Träger umfasst hierbei einen elektrisch nicht leitenden, hochisolierenden Werkstoff, insbesondere eine Keramik aus Aluminiumoxid. Das auf der Oberfläche des Trägerelements angeordnete Sensorelement weist hierbei eine Elektrodenstruktur aus mindestens zwei Messelektroden unterschiedlicher Polarität auf, wobei die Messelektroden in Form einer interdigitalen Kammstruktur mit einzelnen Fingerelektroden, welche elektrisch miteinander verbunden sind, ausgestaltet sind. Die Bezeichnung "interdigitale Kammstruktur" kommt daher, dass die Fingerelektroden beider Messelektroden kammartig abwechselnd ineinander greifen. Jede der derart ausgestalteten Messelektroden ist über eine Leiterbahn mit einem Anschlusskontakt zum Anschließen an eine Mess- und Steuereinheit verbunden. Die interdigitale Kammstruktur dient als Widerstandsmessstruktur, welche im Betrieb dem Gasstrom unmittelbar ausgesetzt ist. Lagern sich die im Gasstrom mitgeführten, elektrisch leitenden Partikel, insbesondere die diese Eigenschaft aufweisenden Rußpartikel, auf dem Sensorelement ab, so ändert sich der elektrische Widerstand zwischen den beiden Messelektroden. Mit steigender Partikelkonzentration auf dem Sensorelement nimmt beispielsweise der elektrische Widerstand ab. Aus einer zeitlichen Änderung der jeweiligen Messgröße, insbesondere dem elektrischen Widerstand, kann mittels der Mess- und Steuereinheit die Konzentration der angelagerten Partikel bestimmt und hieraus auf die Partikelkonzentration im Gasstrom geschlossen werden.

Während übliche Partikelsensoren über eine interdigitale Kammstruktur mit Fingerelektroden verfügen, wobei die Fingerelektroden gegenseitige Abstände zueinander aufweisen, welche äquidistant sind, offenbart die DE 10 2004 059 650 A1 einen Sensor zur Bestimmung der Konzentration von Partikeln in einem Gasstrom, in welchem die interdigitale Kammstruktur einen variierenden Abstand zwischen den Fingerelektroden aufweist. Auf diese Weise kann ein erster Bereich mit weit voneinander entfernt angeordneten Fingerelektroden und ein zweiter Bereich mit eng beieinander liegenden Fingerelektroden erzielt werden. Während das Sensorelement, das über eine interdigitale Kammstruktur mit äquidistand zueinander angeordneten Fingerelektroden verfügt, bei Beaufschlagung mit einer Spannung zwischen den Messelektroden ein symmetrisches elektrisches Feld ausbildet, welches dadurch gekennzeichnet ist, dass das elektrische Feld eine konstante Richtung und Stärke zwischen den Fingerelektroden aufweist, bildet sich in dem Sensorelement gemäß der DE 10 2004 059 650 A1 bei Anlegen einer elektrischen Spannung ein nicht ortskonstantes elektrisches Feld aus. Partikel, welche sich zwischen eng beieinander liegenden Fingerelektroden niederschlagen, können in diesem Bereich schnell einen leitfähigen Pfad ausbilden und auf diese Weise ein Messsignal auslösen, wodurch die Empfindlichkeit des Sensors zunimmt. Durch eine sukzessive Anlagerung weiterer Partikel werden auch leitfähige Pfade zwischen entfernt voneinander angeordneten Fingerelektroden ausgebildet, wodurch über einen längeren Zeitraum eine stärkere Signalerhöhung erreicht wird, welche höher ist als bei äquidistant zueinander angeordneten Messelektroden, was schließlich zu einer Verstärkung des Sensorsignals führen kann. Darüber hinaus kann die Partikelanlagerungsrate durch verstärkte Feldgradienten erhöht werden, die dadurch erzeugt werden, dass die Fingerelektroden eine Substruktur, etwa in Form von regelmäßig angeordneten Spitzen, Quadraten, Punkten oder anderen geometrischen Formen, aufweist.

Der so beschriebene Sensor ist üblicherweise zumindest teilweise von mindestens einem Schutzrohr umgeben, welches insbesondere der Strömungszuführung des Gasstroms entlang des Sensorelements dient. Im Allgemeinen ist das Schutzrohr hierbei kaminförmig ausgestaltet, sodass der Gasstrom aus einer Eintrittsöffnung entlang der Oberfläche des Sensorelements in Richtung einer Austrittsöffnung geführt wird. Auf diese Weise soll das Schutzrohr eine möglichst gleichförmige Überströmung des Sensorelements entlang der Hauptelektrodenrichtung, welche im Folgenden auch als X-Richtung bezeichnet wird, bei möglichst gleichzeitig geringer Winkelabhängigkeit bewirken. In Folge dieser gleichförmigen, laminaren Überströmung des Sensorelements mit dem Gasstrom gelangen zwar viele Partikel in die Nähe des Sensorelements, aber, wie aktuelle Untersuchungen zeigen, wird nur ein geringer Bruchteil davon tatsächlich auf der Oberfläche des Sensorelements angelagert. Nur Partikel, welche in einer Schicht nahe der Oberfläche der interdigitalen Kammstruktur strömen, erfahren hinreichend starke Anziehungskräfte senkrecht zur Hauptströmung und werden hierdurch in Richtung des Sensorelements, welche im Folgenden als Z-Richtung bezeichnet wird, beschleunigt, wo sie durch entsprechende Anlagerung sukzessive elektrisch leitende Partikelpfade, insbesondere Rußpfade, ausbilden.

In Partikelsensoren gemäß dem Stand der Technik erfahren nur Partikel, welche sich in einer Schicht mit einem Abstand über Elektrodenstruktur von typischerweise deutlich geringer als 500 µm aufhalten, eine entsprechende Anziehung durch das mittels der Messelektroden ausgebildeten elektrischen Feldes. Alle Partikel, welche sich in einer größeren Entfernung der Elektrodenstruktur aufhalten, werden dagegen am Sensorelement vorbeigeleitet und verlassen, ohne zu einem messbaren Effekt beizutragen, das Schutzrohr durch die Austrittsöffnung.

Partikel dagegen, welche in das Einzugsgebiet des anziehenden elektrischen Feldes gelangen, erfahren im Allgemeinen eine schnelle zeitliche Beschleunigung, wodurch die Beaufschlagung der Elektrodenstruktur überwiegend in derjenigen Region auf dem Sensorelement erfolgt, welche zunächst von der Gasströmung überströmt wird. Auf diese Weise wird in vielen Fällen nur ein Bruchteil der vorhandenen Fläche der Elektrodenstruktur auf dem Sensorelement dazu eingesetzt, um ein messbares Signal zu erhalten, sodass der Sensor häufig nur eine vergleichsweise geringe Empfindlichkeit aufweist.

Weitere Sensoren sind in der US 2011/259079 A1, der JP 2012 013639 A und der US 7 143 637 B1 bekannt.

### Offenbarung der Erfindung

Die Aufgabe der vorliegenden Erfindung besteht darin, einen Sensor zur Bestimmung einer Konzentration von Partikeln in einem Gasstrom, insbesondere von Rußpartikeln im Abgas einer Verbrennungskraftmaschine, bereitzustellen, welcher über eine möglichst hohe Empfindlichkeit verfügt, ohne eine zu frühe Sättigung des Sensors zu bewirken. Diese Aufgabe wird dadurch gelöst, dass durch eine möglichst optimale Ausgestaltung der Elektrodenstruktur des Sensorelements die auf dem Sensorelement verfügbare Fläche der Elektrodenstruktur möglichst vollständig zur Signalbildung im Sensor unter Beibehaltung von dessen Dynamik eingesetzt werden kann.

Hierzu verfügt der Sensor zur Bestimmung der Konzentration von Partikeln in einem Gasstrom über mindestens ein Trägerelement und mindestens ein, auf einer Oberfläche des Trägerelements angeordnetes, dem Gasstrom aussetzbares Sensorelement. Der Sensor ist hierbei, wie oben beschrieben, in einer vorzugsweisen Ausgestaltung von mindestens einem Schutzrohr umgeben, welches den Sensor zumindest teilweise umgibt und das insbesondere zur Zuführung des Gasstroms über das Sensorelement hinweg dient. Als Trägerelement wird vorzugsweise ein mechanisch hinreichend stabiles Substrat eingesetzt, welches einen möglichst gut isolierenden Werkstoff, insbesondere eine Keramik, etwa Aluminiumoxid, aufweist.

Das dem Gasstrom aussetzbare Sensorelement verfügt über mindestens eine Elektrodenstruktur, wobei die Elektrodenstruktur mindestens zwei Messelektroden aufweist, wobei die Messelektroden über eine voneinander verschiedene Polarität verfügen. Erfindungsgemäß sind hierbei die Messelektroden in Form einer interdigitalen Kammstruktur, welche über Fingerelektroden verfügt, ausgestaltet, welche auf diese Weise eine Widerstandsmessstruktur bereitstellt. Wie eingangs bereits definiert, wird unter der Bezeichnung "interdigitale Kammstruktur" eine Elektrodenstruktur verstanden, bei welcher die Fingerelektroden beider Messelektroden kammartig abwechselnd in ineinandergreifen.

Zur Lösung der oben genannten Aufgabe weisen die Fingerelektroden in der interdigitalen Kammstruktur gegenseitige Abstände zueinander auf, welche über die gesamte Elektrodenstruktur nicht äquidistant sind. Unter äquidistanten Abständen wird eine Ausgestaltung der Elektrodenstruktur verstanden, bei welcher Fingerelektroden im Rahmen der üblichen Toleranzen den selben Abstand aufweisen. Auf diese Weise soll insbesondere sichergestellt werden, dass das bei einer Beaufschlagung der Messelektroden mit einer elektrischen Spannung zwischen den Fingerelektroden erzeugte elektrische Feld eine möglichst homogene Struktur aufweist. Da, wie in Untersuchungen festgestellt und oben bereits dargelegt, es jedoch vorteilhaft ist, dass die Elektrodenstruktur im vorliegenden Sensorelement ein inhomogenes elektrisches Feld erzeugt, werden zu diesem Zweck, wie in der DE 10 2004 059 650 A1 angedeutet, erfindungsgemäß die gegenseitigen Abstände der Fingerelektroden nicht über die gesamte Elektrodenstruktur äquidistant gewählt.

Erfindungsgemäß wird die interdigitale Kammstruktur mit den Fingerelektroden derart ausgestaltet, dass möglichst über die Gesamtlänge und Gesamtbreite der Elektrodenstruktur hinweg alle Bereiche, welche einen geringeren Abstand der Fingerelektroden in Bezug auf einen mittleren Abstand aufweisen, auch zur Signalbildung im vorliegenden Sensor eingesetzt werden können, wodurch sich die Empfindlichkeit des Sensors deutlich steigern lässt. Hierzu wird erfindungsgemäß der Anteil der das Sensorelement beaufschlagenden Partikel erhöht, welche zur Signalbildung beitragen können. Andererseits sollen aber auch genügend Bereiche, welche über einen größeren Abstand der Fingerelektroden in Bezug auf den mittleren Abstand verfügen, in der interdigitalen Kammstruktur vorhanden sein, um auf diese Weise für die Anziehung von Partikeln aus weiter entfernten Schichten über dem Sensorelement zu sorgen, die sich dann im nachfolgenden Bereich mit kürzerem Abstand anlagern und auf diese Weise zusätzlich zur Signalbildung beitragen und unter Beibehaltung der Dynamik des Sensors eine zu frühe Sättigung zu vermeiden.

Erfindungsgemäß wird dieser gewünschte Effekt dadurch erzielt, dass dass der Sensor ein Schutzgehäuse umfasst, das über eine Eintrittsöffnung verfügt, durch welche der Gasstrom in den Innenraum des Schutzgehäuses eintreten kann, und das derart ausgestaltet ist, dass der Gasstrom in einer festgelegten Richtung parallel über die Elektrodenstruktur auf dem Sensorelement geführt wird, bevor der Gasstrom den Innenraum des Schutzgehäuses durch eine Austrittsöffnung verlässt, und dadurch erzielt, dass in der interdigitalen Kammstruktur erste Bereiche mit ersten, großen Abständen der Fingerelektroden und zweite Bereiche mit zweiten, kurzen Abständen der Fingerelektroden vorgesehen sind, wobei die ersten Abstände die zweiten Abstände übertreffen, wobei die ersten Bereiche und die zweiten Bereiche auf der interdigitalen Kammstruktur entlang der festgelegten Richtung, in der der Gasstrom parallel über die Elektrodenstruktur auf dem Sensorelement geführt wird, jeweils alternierend aneinander angrenzen.

Hierbei unterscheiden sich die ersten, großen Abstände von den zweiten, kurzen Abständen dadurch, dass die ersten Abstände oberhalb eines mittleren Abstands liegen, während die zweiten Abstände unterhalb des mittleren Abstands liegen, wobei der mittlere Abstand einen Mittelwert oder Median der Abstände zwischen den Fingerelektroden in X- und/oder Y-Richtung entsprechen kann, wobei der mittlere Abstand aus allen herangezogenen Abständen oder aus Extremwerten, d.h. dem größten Abstand und dem kleinsten Abstand in der Elektrodenstruktur, bestimmt werden kann.

Die ersten Bereiche, welche über die ersten, großen Abstände verfügen, dienen erfindungsgemäß im wesentlichen als elektrostatische Fänger mit einer im Vergleich zum Stand der Technik größeren raumgreifenden Wirkung des elektrischen Feldes. Die so aus größeren Abständen vom Sensorelement erfassten und angezogenen Partikel lagern sich dann vorzugsweise an den zweiten Bereichen mit den zweiten, kurzen Abständen, insbesondere denjenigen zweiten Bereichen, welche jeweils unmittelbar an die ersten Bereiche angrenzen, an und können dort Pfade ausbilden. Auf diese Weise kann die Signalbildung im Wesentlichen nur innerhalb der zweiten Bereiche erfolgen. Die erfindungsgemäße Ausgestaltung, die ersten Bereiche und die zweiten Bereiche auf der Oberfläche des Sensorelements zumindest teilweise, vorzugsweise über weite Gebiete auf der Oberfläche des Sensorelements, alternierend anzuordnen, trägt somit dazu bei, um eine Anlagerung von Partikeln aus dem Gasstrom, welcher das Sensorelement überstreicht, zu fördern.

Vorzugsweise verfügen die zweiten Bereiche über denselben, optimal kurzen Elektrodenabstand, welcher mit Hilfe von numerischen Berechnungen ermittelt wird, während sich die Elektrodenabstände in den ersten Bereichen vorzugsweise stufenweise ändern, wobei eine Änderung insbesondere in Strömungsrichtung (x-Richtung) erfolgt. Damit gelingt es zum einen, möglichst viele der Partikel, welche in dem Gasstrom über das Sensorelement geleitet werden, auf dem Sensorelement anzulagern, auf welchen sie aufgrund ihrer intrinsischen elektrischen Leitfähigkeit einen leitfähigen Pfad erzeugen können, sobald genügend Partikel an einer Stelle zwischen den Fingerelektroden angelagert sind, ohne dass zum anderen infolge einer lokalen Anlagerung wie im Stand der Technik nur in einem Teilbereich der Elektrodenfläche eine zu frühe Sättigung des Sensors eintritt. Auf diese Weise wird die erfindungsgemäße Aufgabe, die Empfindlichkeit des vorliegenden Sensors zu erhöhen, ohne dessen Dynamik einzuschränken, erfüllt.

In einer bevorzugten Ausgestaltung werden sowohl in den ersten Bereichen als auch in den zweiten Bereichen die Abstände der Fingerelektroden derart gewählt, dass sie auf dem Sensorelement, betrachtet in Richtung des Gasstromes, entweder zunehmen oder abnehmen, insbesondere abhängig von den Strömungsbedingungen, welche insbesondere durch die Ausgestaltung des Schutzrohrs über dem Sensorelement erzeugt werden. Insbesondere erfolgt diese Zunahme oder Abnahme der Abstände quasi-kontinuierlich, was auch als stufenförmig oder stufenweise bezeichnet werden kann. Hierunter wird eine Änderung der Abstände verstanden, bei welcher der Abstand über ein Gebiet konstant bleibt oder sogar wieder zunimmt, um in dem angrenzenden Gebiet bei einer Abnahme einen geringeren Wert bzw. bei einer Zunahme einen höheren Wert anzunehmen. Alternativ können, wie oben beschrieben, nur die Abstände in den ersten Bereichen stufenartig zunehmen oder abnehmen, während sie in den zweiten Bereichen konstant bleiben.

Ebenso kann auch der umgekehrte Fall, dass die Abstände in den zweiten Bereichen stufenartig zunehmen oder abnehmen, während sie in den ersten Bereichen konstant bleiben, vorteilhaft sein. In dieser weiteren Ausgestaltung sind die gegenseitigen Abstände der Fingerelektroden in der interdigitalen Kammstruktur dann derart festgelegt, dass sie senkrecht zur Richtung des Gasstroms, welche auch als Y-Richtung bezeichnet wird, entweder zunehmen oder abnehmen können. Auch in dieser Ausgestaltung kann es vorteilhaft sein, dass die Änderung der Abstände der Fingerelektroden in quasi-kontinuierlicher bzw. stufenförmiger Form erfolgen kann. Eine derartige Variation der Abstände kann bei entsprechender Ausgestaltung ebenfalls zur Erhöhung der Empfindlichkeit des vorliegenden Sensors einen Beitrag leisten.

In einer besonderen Ausgestaltung kann eine Oberfläche der Fingerelektroden in der interdigitalen Kammstruktur, welche senkrecht zur Richtung des Gasstroms, d.h. in Y-Richtung verlaufen, geringer sein als die Oberfläche der Fingerelektroden in der interdigitalen Kammstruktur, welche in Richtung des Gasstroms, d.h. in X-Richtung, verlaufen. Aus entsprechenden Untersuchungen geht hervor, dass Elektrodenstrukturen, welche über einen möglichst geringen Anteil an Fingerelektroden verfügen, welche senkrecht zur Strömungsrichtung, d.h. in Y-Richtung, verlaufen, zu einer höheren Ausnutzung der Elektrodenfläche zur Ablagerung von Partikeln und damit zu einer Ausbilung von Rußpfaden führen kann.

In einer weiteren Ausgestaltung kann auch eine Dicke, über welche die Fingerelektroden in der interdigitalen Kammstruktur verfügen, über die interdigitale Kammstruktur auf dem Sensorelement variieren. Hierbei kann es insbesondere vorteilhaft sein, dass die Dicke der Fingerelektroden in Richtung des Gasstroms, d.h. in X-Richtung, abnimmt oder zunimmt. Abhängig von den Strömumgsverhältnissen über dem Sensorelement kann entweder eine geringere oder eine höhere Dicke der Fingerelektroden auf denjenigen Teilen der interdigitalen Kammstruktur, welche zuerst mit dem Gasstrom in Kontakt tritt, einen zusätzlichen Beitrag zur Steigerung der Empfindlichkeit des Sensors liefern. Besonders vorteilhaft hinsichtlich einer Steigerung der Empfindlichkeit des vorliegenden Sensors kann es sich auswirken, wenn in Kombination mit den alternierenden Elektrodenabständen zwischen den ersten Bereichen und den zweiten Bereichen insbesondere die Fingerelektroden der ersten Bereiche, welche über geößere Abstände zueinander verfügen, eine größere Dicke aufweisen.

In einer bevorzugten Ausgestaltung kann das Verhältnis einer ersten Fläche, welche die ersten Bereiche auf dem Sensorelement einnehmen, zu einer zweiten Fläche, welche die zweiten Bereiche auf dem Sensorelement einnehmen im Intervall von mindestens 0,1, vorzugsweise von mindestens 0,3, besonders bevorzugt von mindestens 0,4, bis einschließlich 0,9, vorzugsweise bis einschließlich 0,7, besonders bevorzugt bis einschließlich 0,6, liegen, wobei die Summe der beiden Verhältnisse 1,0 beträgt, wobei das Verhältnis der beiden Flächenanteile vorzugsweise mit Hilfe von numerischen Simulationen bestimmt wird.

In einer weiteren Ausgestaltung können die Fingerelektroden, d.h. alle Fingerelektroden, ein Teil der Fingerelektroden oder alle Fingerelektroden eines Bereichs, in der interdigitalen Kammstruktur zusätzliche Substrukturen aufweisen. Beispielhafte Substrukturen können den in der nachfolgenden Beschreibung aufgeführten Ausführungsbeispielen oder der DE 10 2004 059 650 A1 entnommen werden. Mithilfe von zusätzlichen Substrukturen kann eine weitere Erhöhung der Empfindlichkeit des vorliegenden Sensors erzielt werden.

Zur Herstellung des erfindungsgemäßen Sensors können vorteilhaft aus dem Stand der Technik bekannte Verfahren aus der Dickschicht-Technologie eingesetzt werden, um auf dieser Basis die Elektrodenstruktur in Form einer interdigitalen Kammstruktur mit Fingerelektroden herzustellen. Hier zu eignen sich zu diesem Zweck bereits bekannte Verfahren wie zum Beispiel Siebdruck oder Schablonendruck. Um jedoch auch durch das gewählte Herstellungsverfahren die Empfindlichkeit des vorliegenden Sensors weiter zu steigern, ist es vorteilhaft, neue Verfahren zur Feinstrukturierung der Fingerelektroden in der interdigitalen Kammstruktur einzusetzen. Wie Untersuchungen zeigen, kann hierbei vorzugsweise die Elektrodenstruktur mittels Laserstrukturierung, insbesondere unter Verwendung eines Pikosekunden-Lasers, ausgestaltet werden, welcher eine schnelle und flexible Erzeugung von nahezu beliebigen Strukturen aus einer auf die Trägerstruktur aufgebracht leitfähigen Elektrodenpaste ermöglicht.

Alternativ oder zusätzlich lassen sich die Elektrodenstrukturen, insbesondere Elektrodenstrukturen, welche über möglichst kurze Abstände der Fingerelektroden verfügen, mittels eines 3D-Druckers erzeugen. Hierzu wird zum Beispiel auf den Artikel von M. Hermatschweiler, 3D-Druck auf der Mikroskala erreicht neue Dimensionen, Sensormagazin, 2/2013, Seiten 36-39, verwiesen, welcher eine Übersicht über den Einsatz von 3D-Druckern von der Kleinserienfertigung mittels Rapid-Prototyping bis hin zum Digital Manufacturing in der Automobilindustrie gibt.

### Kurze Beschreibung der Figuren

Bevorzugte Ausführungsbeispiele der vorliegenden Erfindung sind in den Figuren dargestellt und werden in der nachfolgenden Beschreibung näher erläutert. Hierbei zeigen im Einzelnen:
- Figur 1: einen aus dem Stand der Technik bekannten Sensor zur Bestimmung einer Konzentration von Partikeln in einem Gasstrom;
- Figur 2: eine schematische Darstellung der Einbringung des Sensors in ein Schutzgehäuse und der zugehörigen Führung des Gasstroms in senkrechtem Schnitt (Stand der Technik);
- Figur 3: eine schematische Darstellung im Querschnitt eines durch eine Elektrodenstruktur auf dem Sensorelement erzeugten elektrischen Feldes (Stand der Technik);
- Figuren 4 bis 6: jeweils eine schematische Darstellung in Draufsicht von Ausführungsbeispielen von erfindungsgemäßen Elektrodenstrukturen;

### Ausführungsformen der Erfindung

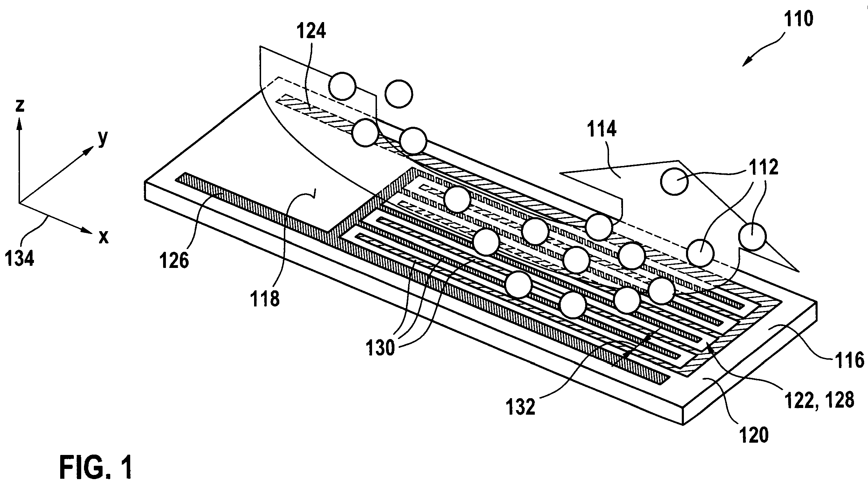

Figur 1 zeigt schematisch einen aus dem Stand der Technik bekannten Sensor 110 zur Bestimmung einer Konzentration von Partikeln 112 in einem Gasstrom 114, 14, insbesondere von Rußpartikeln im Abgas einer Verbrennungskraftmaschine. Der Sensor 110 umfasst hierbei ein Trägerelement 116 und ein auf der Oberfläche 118 des Trägerelements 116 angeordnetes, dem Gasstrom 114 aussetzbares Sensorelement 120. Das Sensorelement 120 weist eine Elektrodenstruktur 122 aus zwei Messelektroden 124, 126 auf, wobei die beiden Messelektroden 124, 126 eine voneinander verschiedene Polarität besitzen. Aus dem Stand der Technik ist es bekannt, die Messelektroden 124, 126 der Elektrodenstruktur 122 in Form einer interdigitalen Kammstruktur 128 mit Fingerelektroden 130 auszugestalten. Üblicherweise verfügen die Fingerelektroden 130 über gegenseitige Abstände 132, welche in der Regel äquidistant sind. Die Elektrodenstruktur 122 auf dem Sensorelement 120 bildet in dieser bevorzugten Ausgestaltung ein Koordinatensystem 134 aus, in welchen die Richtungen X, Y und Z wie folgt festgelegt werden können:
- Die X-Richtung entspricht der Richtung des Gasstroms 114 über dem Sensorelement 120.
- Die Y-Richtung liegt senkrecht zur Richtung des Gasstroms in der Ebene der Elektrodenstruktur.
- Die Z-Richtung steht senkrecht zur Oberfläche 118 des Sensorelements 120, welches über die Elektrodenstruktur 122 in Form der interdigitalen Kammstruktur 128 verfügt. Das Koordinatensystem 124 wird in dieser Form auch in den folgenden Zeichnungen verwendet.

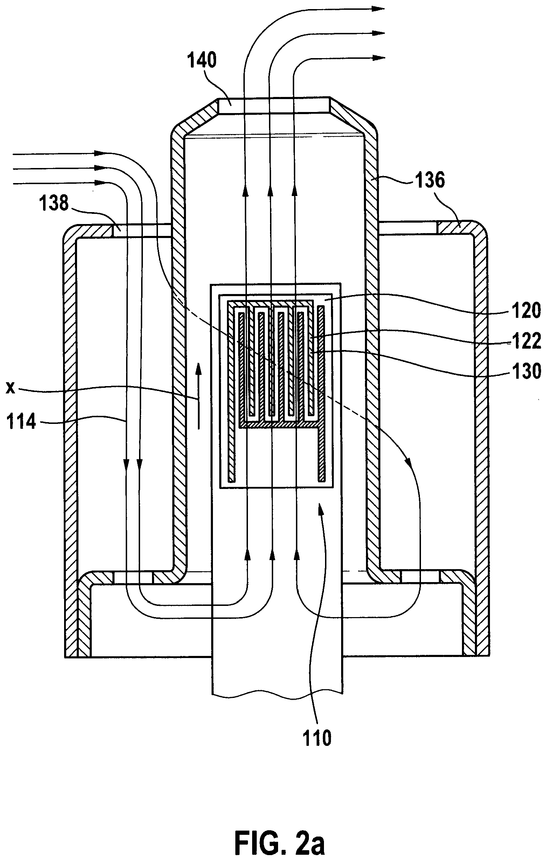

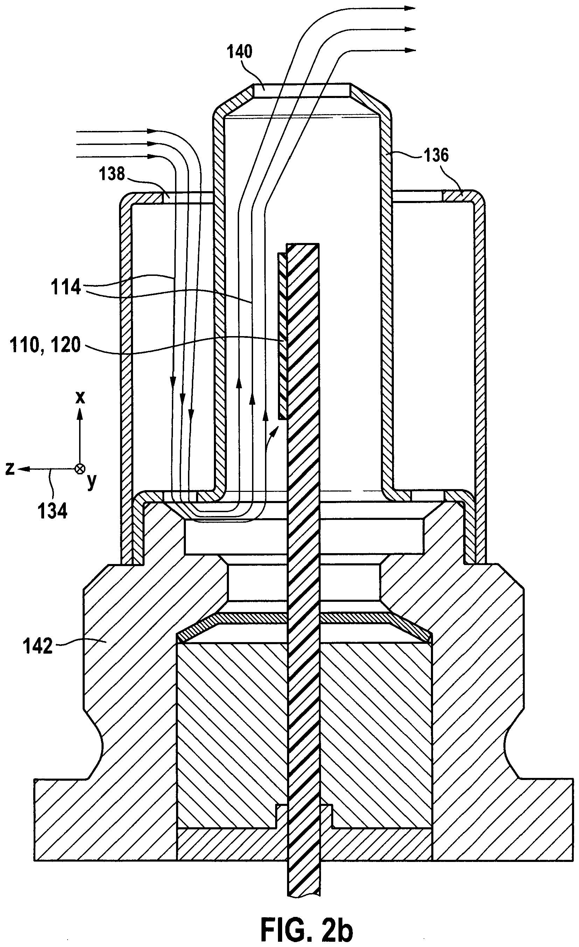

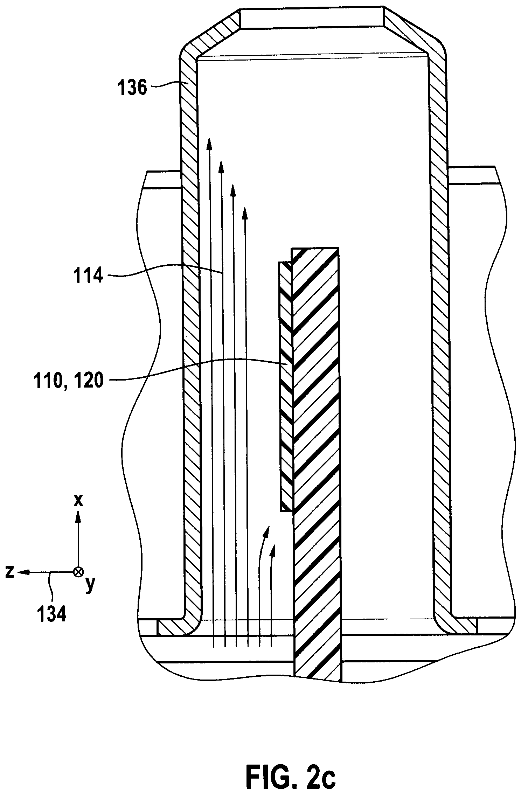

Figur 2 zeigt schematisch einen senkrechten Schnitt durch ein Schutzgehäuse 136, welches den Sensor 110 umgibt. Das Schutzgehäuse 136 verfügt über eine Eintrittsöffnung 138, durch welche der Gasstrom 114 in den Innenraum des Schutzgehäuses 136 eintreten kann. Das Schutzgehäuse 136 ist derart ausgestaltet, dass der Gasstrom 114 möglichst parallel, d.h. in X-Richtung, über den Sensor 110, insbesonder über die Elektrodenstruktur 122 auf dem Sensorelement 120, geführt wird, bevor der Gasstrom 114 den Innenraum des Schutzgehäuses 136 durch die Austrittsöffnung 140 verlässt.

In Figur 2a) ist hierzu schematisch die Strömungsführung des Gasstroms 114 durch das Schutzgehäuse 136 dargestellt, wobei das Sensorelement 120 transversal geschnitten dargestellt ist. Die Elektrodenstruktur 122 auf dem Sensorelement ist hierbei derart ausgerichtet, dass die Fingerelektroden 130 parallel zur Richtung der Strömung des Gasstroms 114, d.h. in X-Richtung, verlaufen.

Die Figuren 2b) und 2c) zeigen in einem lateralen Schnittbild, das auf einen Sechskant 142 aufgebrachte Schutzgehäuse 136, in welchem das Sensorelement 120 dem Gasstrom 114 ausgesetzt ist, wobei Figur 2c) einen Detailausschnitt aus Figur 2b) mit eingefügtem Koordinatensystem 134 darstellt.

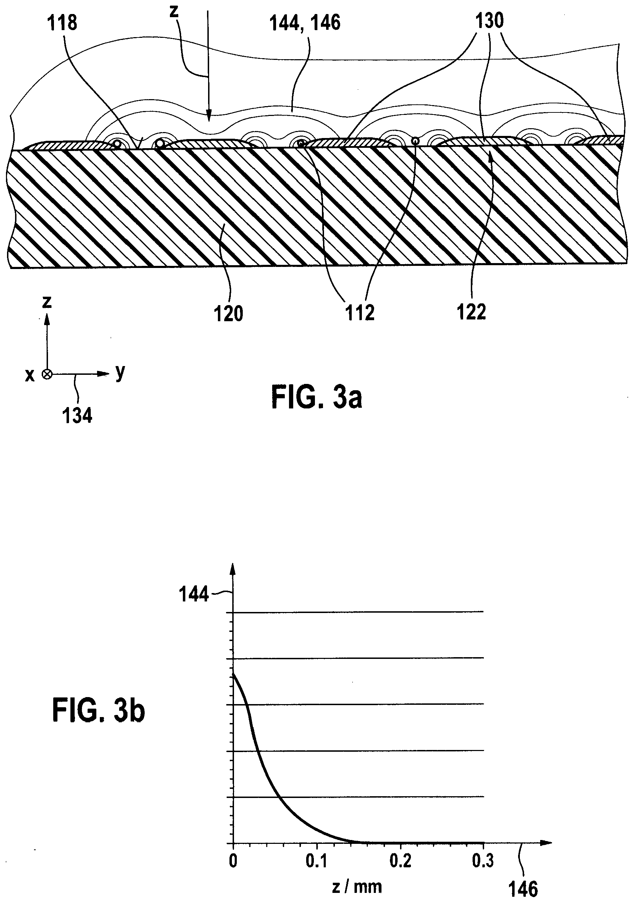

In Figur 3a) ist in Form eines Querschnitts das durch die Elektrodenstruktur 122 des Sensorelements 120 erzeugte elektrische Feld 144 dargestellt. Nur Partikel, welche in eine Schicht 136 nahe der Oberfläche 118 der Elektrodenstruktur 122 gelangen, erfahren eine hinreichend starke Anziehungskraft in Z-Richtung und können auf diese Weise Rußpfade zwischen den Fingerelektroden 130 ausbilden.

Aus Figur 3b) geht hervor, dass in einem aus dem Stand der Technik bekannten Sensor 110 das elektrische Feld 144 lediglich innerhalb einer Schicht 146 eine Wirkung auf die Partikel im Gasstrom ausüben kann, welche sich innerhalb einer Schicht 146 oberhalb der Oberfläche 118 der Elektrodenstruktur 112 befinden, deren Dicke einen Wert von typischerweise deutlich kleiner als 0,5 mm aufweist.

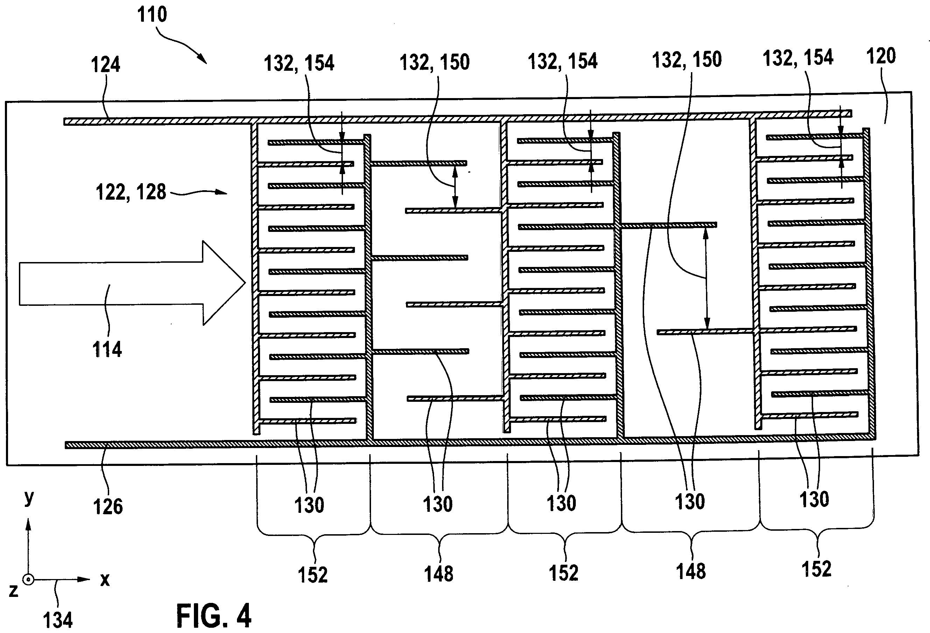

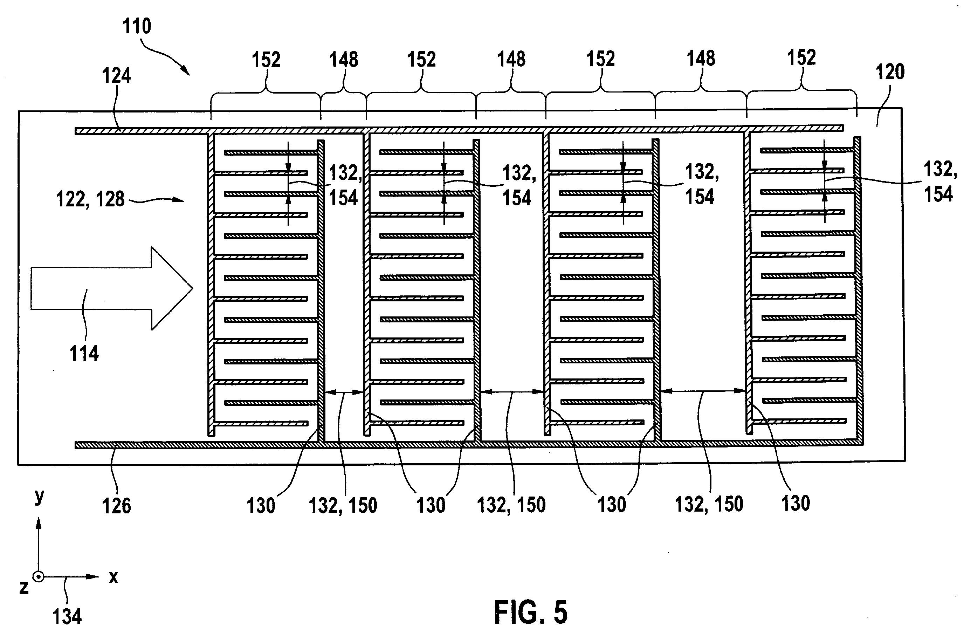

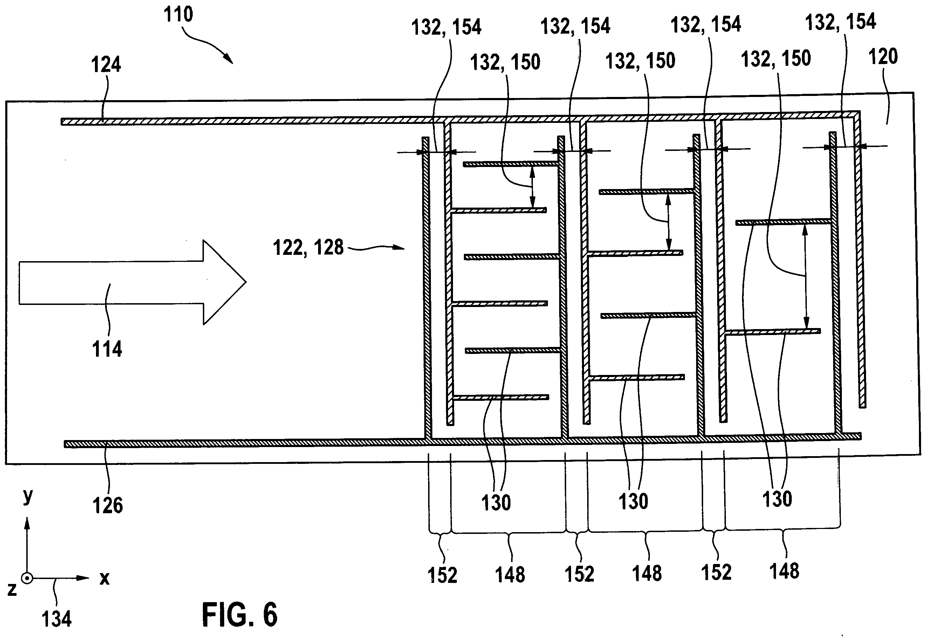

Die Figuren 4 bis 6 zeigen jeweils bevorzugte Ausführungsbeispiele für den erfindungsgemäßen Sensor 110. Hierin weist das Sensorelement 120 die oben beschriebene Elektrodenstruktur 122 in Form der interdigitalen Kammstruktur 128 mit Fingerelektroden 130 auf, wobei die Abstände 132 der Fingerelektroden 130 nicht über die gesamte Elektrodenstruktur 122 äquidistant zueinander sind.

Erfindungsgemäß verfügt die interdigitale Kammstruktur 128 über erste Bereiche 148 mit ersten, größeren Abständen 132, 150 der Fingerelektroden 130 und über zweite Bereiche 152 mit zweiten, kürzeren Abständen 132, 154 der Fingerelektroden, wobei die ersten Abstände 132, 150 die zweiten Abstände 132, 154 übertreffen. Hierbei unterscheiden sich die ersten, größeren Abstände 132, 150 von den zweiten, kürzeren Abständen 132, 154 dadurch, dass die ersten, größeren Abstände 132, 150 oberhalb eines mittleren Abstands liegen, während die zweiten, kürzeren Abstände 132, 154 unterhalb des mittleren Abstands liegen, wobei der mittlere Abstand einen Mittelwert oder Median der Abstände zwischen den Fingerelektroden 130 in X- und/oder Y-Richtung entsprechen kann, wobei der mittlere Abstand aus allen herangezogenen Abständen oder aus Extremwerten, d.h. dem größten Abstand und dem kleinsten Abstand in der Elektrodenstruktur 122, bestimmt werden kann.

Erfindungsgemäß grenzen hierbei die ersten Bereiche 148 und die zweiten Bereiche 152 in der interdigitalen Kammstruktur 128 zumindest über große gebiete auf der Oberfläche 118 des Sensorelements 120 jeweils alternierend aneinander an, d.h. auf den ersten Bereich 148 mit den ersten, größeren Abständen 132, 150 der Fingerelektroden 130 zueinander folgt der zweite Bereich 152 mit den zweiten, kürzeren Abständen 132, 154 der Fingerelektroden 130 zueinander, woraufhin, solange noch Platz auf der Oberfläche 118 des Sensorelements 120 vorhanden ist, der weitere erste Bereich 148 mit den ersten, größeren Abständen 132, 150 der Fingerelektroden 130 zueinander, angeordnet ist.

Mögliche Ausgestaltungen der erfindungsgemäßen interdigitalen Kammstruktur 128 können den in den Figuren 4 bis 6 dargestellten Ausführungsformen entnommen werden. Hierein sind Ausführungsbeispiele dargestellt, in welchen die Länge der Fingerelektroden 130 in der interdigitalen Kammstruktur 128, welche senkrecht zur Richtung des Gasstroms 114 verlaufen, geringer ist als die Länge der Fingerelektroden 114, welche in Richtung des Gasstroms 114 verlaufen. Weitere Ausgestaltungen, welche auch eine Kombination aus den dargestellten Ausführungen sein können oder weitere, hier nicht dargestellte Elemente aufweisen können, sind jedoch denkbar.

In den Figuren 4 bis 6 sind Ausführungen dargestellt, in welchen die Abstände 132 der Fingerelektroden 130 in der interdigitalen Kammstruktur 128 in Richtung des Gasstroms 114 stufenförmig zunehmen.

## Patentansprüche

1. Sensor (110) zur Bestimmung einer Konzentration von Partikeln (112) in einem Gasstrom (114), insbesondere von Rußpartikeln im Abgas einer Verbrennungskraftmaschine, umfassend mindestens ein Trägerelement (116) und mindestens ein, auf einer Oberfläche (118) des Trägerelements (116) angeordnetes, dem Gasstrom (114) aussetzbares Sensorelement (120), wobei das Sensorelement (120) mindestens eine Elektrodenstruktur (122) aus mindestens zwei Messelektroden (124, 126) unterschiedlicher Polarität aufweist, wobei die Messelektroden (124, 126) in Form einer interdigitalen Kammstruktur (128) mit Fingerelektroden (130) ausgestaltet sind, wobei die Fingerelektroden (130) gegenseitige Abstände (132) zueinander aufweisen, wobei in der interdigitalen Kammstruktur (128) erste Bereiche (148) mit einem ersten Abstand (132, 150) der Fingerelektroden (130) und zweite Bereiche (152) mit einem zweiten Abstand (132, 154) der Fingerelektroden (130) vorliegen, wobei der erste Abstand (132, 150) den zweiten Abstand (132, 154) übertrifft, und umfassend ein Schutzgehäuse (136), das über eine Eintrittsöffnung (138) verfügt, durch welche der Gasstrom (114) in den Innenraum des Schutzgehäuses (136) eintreten kann, und das derart ausgestaltet ist, dass der Gasstrom (114) in einer festgelegten Richtung parallel über die Elektrodenstruktur (122) auf dem Sensorelement (120) geführt wird, bevor der Gasstrom (114) den Innenraum des Schutzgehäuses (136) durch eine Austrittsöffnung (140) verlässt, **dadurch gekennzeichnet, dass** die ersten Bereiche (148) und die zweiten Bereiche (152) in der interdigitalen Kammstruktur (128) jeweils entlang der festgelegten Richtung, in der der Gasstrom (114) parallel über die Elektrodenstruktur (122) auf dem Sensorelement (120) geführt wird, alternierend aneinander angrenzen.

2. Sensor nach dem vorangehenden Anspruch, **dadurch gekennzeichnet, dass** die Abstände (132) der Fingerelektroden (130) in der interdigitalen Kammstruktur (128) in Richtung des Gasstroms (114) und/oder senkrecht zur Richtung des Gasstroms (114) auf der Oberfläche (118) des Sensorelements (120) zunehmen oder abnehmen.

3. Sensor nach einem der beiden vorangehenden Ansprüche, **dadurch gekennzeichnet, dass** die Abstände (132) der Fingerelektroden (130) in der interdigitalen Kammstruktur (128) in den ersten Bereichen (148) und/oder in den zweiten Bereichen (152), vorzugsweise kontinuierlich oder stufenförmig, zunehmen oder abnehmen.

4. Sensor nach einem der vorangehenden Ansprüche, **dadurch gekennzeichnet, dass** eine Länge der Fingerelektroden (130) in der interdigitalen Kammstruktur (128), welche senkrecht zur Richtung des Gasstroms (114) verlaufen, geringer ist als die Länge die Fingerelektroden (130) in der interdigitalen Kammstruktur (128), welche in Richtung des Gasstroms (114) verlaufen.

5. Sensor nach einem der vorangehenden Ansprüche, **dadurch gekennzeichnet, dass** die Fingerelektroden (130) in der interdigitalen Kammstruktur (128) eine Dicke aufweisen, welche nicht konstant über die interdigitale Kammstruktur (128) ist.

6. Sensor nach dem vorangehenden Anspruch, **dadurch gekennzeichnet, dass** die Dicke der Fingerelektroden (130) in Richtung des Gasstroms (114) und/oder senkrecht zur Richtung des Gasstroms (114) auf der Oberfläche (118) des Sensorelements (120), vorzugsweise kontinuierlich oder stufenförmig, zunimmt oder abnimmt.

7. Sensor nach dem vorangehenden Anspruch, **dadurch gekennzeichnet, dass** die Dicke der Fingerelektroden (130) in den ersten Bereichen (148) und/oder in den zweiten Bereichen (152) in Richtung des Gasstroms (114) zunimmt oder abnimmt.

8. Sensor nach einem der vorangehenden Ansprüche, **dadurch gekennzeichnet, dass** das Verhältnis einer ersten Fläche, welche die ersten Bereiche (148) auf dem Sensorelement (120) einnehmen, zu einer zweiten Fläche, welche die zweiten Bereiche (152) auf dem Sensorelement (120) einnehmen, im Intervall von mindestens 0,1 bis einschließlich 0,9 liegt, wobei die Summe der beiden Verhältnisse 1,0 beträgt.

9. Sensor nach einem der vorangehenden Ansprüche, **dadurch gekennzeichnet, dass** die Fingerelektroden (130) in der interdigitalen Kammstruktur (128) Substrukturen aufweisen.

10. Sensor nach einem der vorangehenden Ansprüche, **dadurch gekennzeichnet, dass** die Fingerelektroden (130) in der interdigitalen Kammstruktur (128) auf der Oberfläche (118) des Trägerelements (116) mittels Laserstrukturierung und/oder mittels eines 3D-Druckers ausgestaltet sind.

## Claims

1. Sensor (110) for determining a concentration of particles (112) in a gas flow (114), in particular of soot particles in the exhaust gas from an internal combustion engine, comprising at least one carrier element (116) and at least one sensor element (120), which is arranged on a surface (118) of the carrier element (116) and can be exposed to the gas flow (114), the sensor element (120) having at least one electrode structure (122) made of at least two measuring electrodes (124, 126) of different polarity, the measuring electrodes (124, 126) being configured in the form of an interdigital comb structure (128) with finger electrodes (130), the finger electrodes (130) having mutual spacings (132) from one another, in the interdigital comb structure (128) first regions (148) being present with a first spacing (132, 150) of the finger electrodes (130) and second regions (152) being present with a second spacing (132, 154) of the finger electrodes (130), the first spacing (132, 150) exceeding the second spacing (132, 154), and comprising a protective housing (136), which has an inlet opening (138) through which the gas flow (114) can enter the interior of the protective housing (136), and which is configured in such a way that the gas flow (114) is guided in a fixed direction in parallel over the electrode structure (122) on the sensor element (120) before the gas flow (114) leaves the interior of the protective housing (136) through an outlet opening (140), **characterized in that** the first regions (148) and the second regions (152) in the interdigital comb structure (128) each adjoin one another in an alternating fashion along the defined direction in which the gas flow (114) is guided in parallel over the electrode structure (122) on the sensor element (120).

2. Sensor according to the preceding claim, **characterized in that** the spacings (132) of the finger electrodes (130) in the interdigital comb structure (128) increase or decrease in the direction of the gas flow (114) and/or at right angles to the direction of the gas flow (114) on the surface (118) of the sensor element (120).

3. Sensor according to one of the two preceding claims, **characterized in that** the spacings (132) of the finger electrodes (130) in the interdigital comb structure (128) increase or decrease, preferably continuously or stepwise, in the first regions (148) and/or in the second regions (152).

4. Sensor according to one of the preceding claims, **characterized in that** a length of the finger electrodes (130) in the interdigital comb structure (128) which run at right angles to the direction of the gas flow (114) is less than the length of the finger electrodes (130) in the interdigital comb structure (128) which run in the direction of the gas flow (114).

5. Sensor according to one of the preceding claims, **characterized in that** the finger electrodes (130) in the interdigital comb structure (128) have a thickness which is not constant over the interdigital comb structure (128).

6. Sensor according to the preceding claim, **characterized in that** the thickness of the finger electrodes (130) increases or decreases, preferably continuously or stepwise, in the direction of the gas flow (114) and/or at right angles to the direction of the gas flow (114) on the surface (118) of the sensor element (120).

7. Sensor according to the preceding claim, **characterized in that** the thickness of the finger electrodes (130) in the first regions (148) and/or in the second regions (152) increases or decreases in the direction of the gas flow (114).

8. Sensor according to one of the preceding claims, **characterized in that** the ratio of a first area occupied by the first regions (148) on the sensor element (120) to a second area occupied by the second regions (152) on the sensor element (120) lies in the interval from at least 0.1 up to and including 0.9, wherein the sum of the two ratios is 1.0.

9. Sensor according to one of the preceding claims, **characterized in that** the finger electrodes (130) in the interdigital comb structure (128) have substructures.

10. Sensor according to one of the preceding claims, **characterized in that** the finger electrodes (130) in the interdigital comb structure (128) on the surface (118) of the carrier element (116) are configured by means of laser structuring and/or by means of a 3D printer.

## Revendications

1. Capteur (110) destiné à déterminer une concentration de particules (112) dans un flux de gaz (114), notamment de particules de suie des les gaz d'échappement d'un moteur à combustion interne, comprenant au moins un élément porteur (116) et au moins un élément capteur (120) disposé sur une surface (118) de l'élément porteur (116) et pouvant être exposé au flux de gaz (114), l'élément capteur (120) possédant au moins une structure d'électrode (122) composée d'au moins deux électrodes de mesure (124, 126) de polarités différentes, les électrodes de mesure (124, 126) étant configurées sous la forme d'une structure en peigne interdigitale (128) ayant des électrodes en forme de doigt (130), les électrodes en forme de doigt (130) présentant des écarts (132) mutuels, des premières zones (148) ayant un premier écart (132, 150) entre les électrodes en forme de doigt (130) et des deuxièmes zones (152) ayant un deuxième écart (132, 154) entre les électrodes en forme de doigt (130) se trouvant dans la structure en peigne interdigitale (128), le premier écart (132, 150) surpassant le deuxième écart (132, 154), et comprenant un boîtier de protection (136) qui dispose d'une ouverture d'entrée (138) à travers laquelle le flux de gaz (114) peut pénétrer dans l'espace intérieur du boîtier de protection (136), et qui est configuré de telle sorte que le flux de gaz (114) est guidé sur l'élément capteur (120) dans une première direction définie, parallèlement au-dessus de la structure d'électrode (122), avant que le flux de gaz (114) quitte l'espace intérieur du boîtier de protection (136) par une ouverture de sortie (140), **caractérisé en ce que** les premières zones (148) et les deuxièmes zones (152) dans la structure en peigne interdigitale (128) sont mutuellement adjacentes en alternance respectivement le long de la direction définie dans laquelle le flux de gaz (114) est guidé sur l'élément capteur (120) parallèlement au-dessus de la structure d'électrode (122).

2. Capteur selon la revendication précédente, **caractérisé en ce que** les écarts (132) entre les électrodes en forme de doigt (130) dans la structure en peigne interdigitale (128) augmentent ou diminuent sur la surface (118) de l'élément capteur (120) dans la direction du flux de gaz (114) et/ou perpendiculairement à la direction du flux de gaz (114).

3. Capteur selon l'une des deux revendications précédentes, **caractérisé en ce que** les écarts (132) entre les électrodes en forme de doigt (130) dans la structure en peigne interdigitale (128) augmentent ou diminuent dans les premières zones (148) et/ou dans les deuxièmes zones (152), de préférence continuellement ou par paliers.

4. Capteur selon l'une des revendications précédentes, **caractérisé en ce qu'**une longueur des électrodes en forme de doigt (130) dans la structure en peigne interdigitale (128) qui s'étendent perpendiculairement à la direction du flux de gaz (114) est inférieure à la longueur des électrodes en forme de doigt (130) dans la structure en peigne interdigitale (128) qui s'étendent dans la direction du flux de gaz (114) .

5. Capteur selon l'une des revendications précédentes, **caractérisé en ce que** les électrodes en forme de doigt (130) dans la structure en peigne interdigitale (128) possèdent une épaisseur qui n'est pas constante sur la structure en peigne interdigitale (128).

6. Capteur selon l'une des revendications précédentes, **caractérisé en ce que** l'épaisseur des électrodes en forme de doigt (130) augmente ou diminue sur la surface (118) de l'élément capteur (120) dans la direction du flux de gaz (114) et/ou perpendiculairement à la direction du flux de gaz (114), de préférence continuellement ou par paliers.

7. Capteur selon la revendication précédente, **caractérisé en ce que** l'épaisseur des électrodes en forme de doigt (130) augmente ou diminue dans la direction du flux de gaz (114) dans les premières zones (148) et/ou dans les deuxièmes zones (152).

8. Capteur selon l'une des revendications précédentes, **caractérisé en ce que** le rapport entre une première surface, qui est occupée par les premières zones (148) sur l'élément capteur (120), et une deuxième surface, qui est occupée par les deuxièmes zones (152) sur l'élément capteur (120), est compris dans l'intervalle d'au moins 0,1 à 0,9 inclus, la somme des deux rapports étant égale à 1,0.

9. Capteur selon l'une des revendications précédentes, **caractérisé en ce que** les électrodes en forme de doigt (130) dans la structure en peigne interdigitale (128) possèdent des sous-structures.

10. Capteur selon l'une des revendications précédentes, **caractérisé en ce que** les électrodes en forme de doigt (130) dans la structure en peigne interdigitale (128) sont réalisées sur la surface (118) de l'élément porteur (116) au moyen de la structuration au laser et/ou au moyen d'une imprimante 3D.
